(19) Europäisches Patentamt
European Patent Office
Office européen des brevets

(11) **EP 2 296 356 B1**

(12) **EUROPÄISCHE PATENTSCHRIFT**

(45) Veröffentlichungstag und Bekanntmachung des Hinweises auf die Patenterteilung:
**17.04.2013  Patentblatt 2013/16**

(51) Int Cl.:
*H04M 1/60* (2006.01)  *H04M 1/24* (2006.01)

(21) Anmeldenummer: **10172362.5**

(22) Anmeldetag: **10.08.2010**

(54) **Verfahren und Vorrichtung zur Analyse und Abstimmung akustischer Eigenschaften einer Kfz-Freisprecheinrichtung**

Method and device for analysing and calibrating acoustic characteristics of a motor vehicle hands-free kit

Procédé et dispositif d'analyse et de détermination de propriétés acoustiques d'un dispositif téléphonique mains libres de véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.09.2009  DE 102009029367**

(43) Veröffentlichungstag der Anmeldung:
**16.03.2011  Patentblatt 2011/11**

(73) Patentinhaber: **Ruwisch, Dietmar**
**12557 Berlin (DE)**

(72) Erfinder: **Ruwisch, Dietmar**
**12557 Berlin (DE)**

(74) Vertreter: **Sieckmann, Dirk Christoph**
**Betten & Resch**
**Patentanwälte**
**Theatinerstrasse 8**
**80333 München (DE)**

(56) Entgegenhaltungen:
**EP-A1- 1 883 213    EP-A1- 2 031 846**
**EP-B1- 1 595 427    FR-A1- 2 736 490**

**Beschreibung**

Die vorliegende Erfindung betrifft ein Verfahren und eine Vorrichtung zur Analyse und insbesondere Abstimmung akustischer Eigenschaften einer Kfz-Freisprecheinrichtung. Insbesondere betrifft die vorliegende Erfindung ein Verfahren und eine Vorrichtung, um Kfz-Freisprecheinrichtungen an die Akustik des Kfz, in das die Freisprecheinrichtung eingebaut wird, anzupassen.

Die Freisprecheinrichtung zum Telefonieren im Kfz ist heutzutage typischerweise eine von mehreren Audiokomponenten im Kfz, die beispielsweise mit dem Autoradio und/oder der akustischen Ausgabe eines Navigationsgerätes im Kfz interagieren muss. Diese Vielzahl von Audiokomponenten führt zu komplexen Anforderungen an die akustischen Eigenschaften des Audiogesamtsystems im Kfz, da neben der reinen Tonausgabe beispielsweise auch ein Aufnahme- und Sendekanal während des Telefonierens oder zur akustischen Bedienung von Komponenten des Kfz erforderlich ist. Für diesen Aufnahmekanal wird ein Mikrofon eingesetzt, das gewöhnlicher Weise von einem entsprechend spezialisierten Zulieferer stammt. Obwohl hier für alle Komponenten des Audiosystems jeweils genaue Spezifikationen vorgegeben werden, die ein reibungsloses Zusammenspiel gewährleisten sollten, treten aufgrund der Komplexität des Gesamtsystems unerwünschte Phänomene auf, die nicht mit den Spezifikationen allein in den Griff zu bekommen sind.

In der Entwicklungsphase eines Kfz wird daher das komplette Audiosystem inklusive Freisprecheinrichtung mit eingebautem Mikrofon genauer vermessen, indem in der Erstausrüstung ein Kfz-modellspezifisches Tuning insbesondere der Freisprecheinrichtung vorgenommen wird, um die ungewollten Phänomene zu beseitigen und die Kfz-Freisprecheinrichtung möglichst gut an die Akustik des Kfz anzupassen. Für dieses Tuning wird bisher üblicherweise ein spezielles Mess-Equipment verwendet, mit dem der akustische Ist-Zustand im Kfz ermittelt wird und im Falle von Abweichungen von der Spezifikation dann mit Hilfe von Expertenwissen einzelne Parameter der Audiokomponenten geändert werden, um die Audioqualität zu optimieren. Die hierfür erforderlichen wiederholten Messvorgänge und deren Auswertung gestalten sich oft als schwierig, da für die notwendigen Systemparameteränderungen zur Einhaltung der Spezifikationen oft nur Erfahrungswerte vorliegen und aufgrund der gegenseitigen Abhängigkeiten der Systemparameter und ihrer akustischen Auswirkungen die Änderung eines Systemparameters zwar dazu führt, dass die Spezifikation nun an einer Stelle eingehalten, dafür aber an einer anderen Stelle wiederum verletzt wird.

In der FR 2736490 wird eine Testvorrichtung für Schallsignale eines Funktelefons beschrieben, welches sich in der Fahrgastzelle eines Kraftfahrzeugs befindet

Die Leistungsfähigkeit der Telefon-Freisprecheinrichtung wird weiterhin typischerweise anhand einer umfangreichen Spezifikation und Messvorschrift des Verbands der Deutschen Automobilhersteller (VDA) bestimmt Die Spezifikation und Messvorschrift schreibt hierfür eine Akustikmessung vor, die typischerweise mit Hilfe eines sehr aufwendigen Mess-Equipments durchgeführt wird. Wesentliches Element dieses Mess-Equipments ist ein künstlicher Torso, der so auf dem Fahrersitz des Kfz platziert wird, dass ein kalibrierter Lautsprecher des Torso als künstlicher Mund einen definierten Abstand zum im Kfz eingebauten Freisprechmikrofon aufweist. Außer dem künstlichen Mund-Lautsprecher besitzt der künstliche Torso auch "künstliche Ohren" in Form von kalibrierten Messmikrofonen, die das aufnehmen, was eine Norm-Person auf dem Fahrersitz des Kfz hören würde. An diesen künstlichen Torso ist eine Audioanlage angeschlossen, die von einer entsprechenden Analyse-Software auf einem angeschlossenen PC gesteuert wird, um Testsignale zu erzeugen und aufzunehmen. Zur Kommunikation mit der Kfz-Freisprecheinrichtung wird weiterhin ein handelsübliches Mobiltelefon eingesetzt, welches mit der Freisprecheinrichtung verbunden ist. Mit diesem für die Messung verwendeten Mobiltelefon kommt jedoch ein weiterer schwer kalkulierbarer Faktor in den Signalweg, da die Verbindungsqualität zur Freisprecheinrichtung über das Mobiltelefon unbestimmt und schwankend ist und das Mobiltelefon selbst darüber hinaus zusätzlich zur Freisprecheinriehtung beispielsweise eine Geräuschunterdrückung oder Echo-Cancelling im Signalpfad durchführt, die für die Messung zwar abgeschaltet werden sollen, was aber nicht immer möglich ist - mit unkalkulierbaren Folgen für das Messergebnis.

Ein Ausweg, der hier zumindest die Unwägbarkeiten des Mobilfunknetzwerks eliminiert, ist der Einsatz eines VDA-spezifikationsgemäßen Netzwerksimulators, mit dem das öffentliche Mobilfunknetz umgangen wird und das Mobiltelefon mit einer "privaten" Mobilfunkzelle verbunden wird, um Signale zwischen dem Mobiltelefon und der Kfz-Freisprecheinrichtung auszutauschen. Solche Netzwerksimulatoren sind jedoch sehr teuer und erfordern spezielle Kenntnisse für deren ordnungsgemäßen Einsatz.

Ein weiteres Problem stellt die Möglichkeit der Einstellung der Systemparameter der Kfz-Freisprecheinrichtung dar. Hierfür werden oft nur proprietäre Schnittstellen und entsprechend unhandliche Softwarewerkzeuge zur Verfügung gestellt.

Darüber hinaus ergeben sich beim Zusammenspiel der Audiokomponenten weitere Probleme beim Freisprechtelefonieren, da beispielsweise dafür Sorge zu tragen ist, dass beim Telefonieren das Radio stumm geschaltet ist oder das Navigationssystem keine Ansagen ausgibt. Solche und andere Probleme ließen sich mittels Echo-Cancelling lösen, wozu jedoch wiederum genauere Abstimmungen der Interfaces der einzelnen Audio-Komponenten erforderlich wären, was in der Praxis gewöhnlich nicht gewährleistet ist.

Der Großteil der Kommunikationsanwendungen innerhalb und außerhalb des Kfz verwendet zur Aufnahme des Sprechersignals ein einzelnes Mikrofon mit anschließender digitaler Signalverarbeitung zur Verbesserung der Übertragungsqualität. Mithilfe rein mechanischer Maßnahmen im Mikrofongehäuse lässt sich eine gewisse Richtcharakteristik der Schallaufnahme realisieren, was in geräuschbelasteter Umgebung wie z.B. im Kfz zu einer Verbesserung des Signal-Geräusch-Verhältnisses führt, wenn die Position des Sprechers bekannt und wenig veränderlich ist. Werden statt eines Mikrofons derer zwei (oder noch mehr) benutzt, spricht man von einem Mikrofon-Array. Damit es ist möglich, eine Richtungsempfindlichkeit in der digitalen Signalverarbeitung zu erreichen. Hier sind zunächst die klassischen "Shift and add" bzw. "Filter and add" Verfahren zu nennen, bei denen ein Mikrofonsignal gegenüber dem zweiten zeitlich verschoben oder gefiltert wird, bevor die so manipulierten Signale addiert werden. Auf diese Weise ist es möglich, eine Schallauslöschung ("destruktive hterferenz") für Signale zu erreichen, die aus einer bestimmten Richtung eintreffen. Da die zugrundeliegende Wellengeometrie formal identisch mit Erzeugung einer Richtwirkung in Funkanwendungen bei Verwendung mehrer Antennen ist, spricht man hier auch von "Beam Forming", wobei der "Strahl" der Radiowellen durch die Dämpfungsrichtung bei der Zwei-Mikrofon-Technik ersetzt wird. Die Bezeichnung "Beam Forming" hat sich für Mikrofon-Array-Anwendungen als Gattungsbezeichnung durchgesetzt, obwohl hier von einem "Strahl" eigentlich keine Rede sein kann. Irreführender Weise wird der Begriff nicht nur für die soeben beschriebene klassische Mehr-Mikrofon-Technik benutzt, sondern auch für fortschrittlichere, nicht-lineare Array-Techniken, für die die Analogie mit der Antennentechnik überhaupt nicht mehr gilt

Diese klassischen Verfahren verfehlen jedoch das eigentlich gewünschte Ziel: In der Kfz-Freisprecheinrichtung hilft es beispielsweise wenig, Schallsignale zu dämpfen, die aus einer bestimmten Richtung eintreffen. Vielmehr ist es umgekehrt erforderlich, möglichst nur die aus einer bestimmten Richtung kommenden Signale weiterzuleiten, nämlich diejenigen aus der Richtung des Sprechers.

Ein solches Verfahren ist aus EP1595427B1 bekannt. Anders als bei der bereits erwähnten Richtwirkung mithilfe mechanischer Mittel im Mikrofongehäuse können Winkel und die Breite des "Richtkegels" bzw. korrekt des Rotationshyperboloids sowie die Dämpfung für Signale außerhalb des Richtkegels in diesem Verfahren mittels vorgegebener Parameter gesteuert werden.

In der Praxis zeigen sich einige Nachteile dieses Verfahrens. Die Ergebnisse entsprechen nur im Freifeld und im Nahfeld dem gewünschten Resultat, außerdem ist eine sehr geringe Toleranz der verwendeten Bauteile (inkl. Mikrofone) erforderlich, da sich Abweichungen in den Phasen der Mikrofonsignale negativ auf die Performance des Verfahrens auswirken. Die benötigten engen Bauteiltoleranzen lassen sich in aller Regel mit Hilfe geeigneter Technologien auch in der Massenfertigung realisieren, schwieriger lassen sich die Nahfeld/Freifeld-Einschränkungen umgehen. Von einem Freifeld spricht man, wenn die Schallwelle ungehindert eintrifft, also ohne auf dem Signalweg reflektiert, gedämpft, oder sonst wie verändert worden zu sein. Im Nahfeld zeigt sich im Gegensatz zum Fernfeld, bei dem das Schallsignal als ebene Welle eintrifft, die Krümmung der Wellenfront noch deutlich. Auch wenn dies eigentlich eine unerwünschte Abweichung von den Annahmen des Verfahrens ist, besteht in einem wesentlichen Punkte große Ähnlichkeit zum Freifeld: Da die Signalquelle so nah ist, sind die Phasenstörungen durch Reflexionen o.ä. im Vergleich zum Nutzsignal gering.

Insbesondere im Kfz-Innenraum sind solche Phaseneffekte jedoch erheblich, da etliche glatte Oberflächen in der Nähe der zumindest zwei Mikrofone im Mikrofonarray die Phasenbeziehung zwischen den Mikrofonsignalen so stark stören, dass das Ergebnis der Signalverarbeitung nach dem oben bezeichneten Verfahren unbefriedigend ist.

Insgesamt ist die (akustische) Integration von einer Freisprecheinrichtung in das Kfz aufgrund der diversen akustischen Anforderungen oft problembehaftet und erfordert zur Lösung vielfach Experten-Know-How und viel Erfahrung, insbesondere wenn nur begrenzte Möglichkeiten zur Interaktion mit dem akustischen Gesamtsystem zur Verfügung gestellt werden. Für die Kfz-Hersteller ist diese Situation äußerst unbefriedigend, da sie sich für jedes Kfz-Modell eine möglichst optimale Audioperformance aller Komponenten im Audiogesamtsystem, einschließlich der Freisprecheinrichtung wünschen, die hierfür erforderliche komplizierte Einmess- und Tuning-Prozedur vielen Herstellern jedoch zu aufwendig und zu teuer ist.

Es ist daher Aufgabe der vorliegenden Erfindung, ein Verfahren und eine Vorrichtung zur Analyse und Abstimmung akustischer Eigenschaften einer Kfz-Freisprecheinrichtung vorzuschlagen, die die Nachteile des Standes der Technik möglichst vermeidet und insbesondere mit relativ einfachen Mitteln eine Analyse der Audioeigenschaften sowie eine automatische Einstellung wichtiger Parameter der Freisprecheinrichtung ermöglicht, um insbesondere das akustische Gesamtsystem mit den verbauten Audiokomponenten einschließlich der Freisprecheinrichtung an die akustischen Eigenschaften des Kfz-Modells und der Komponenten untereinander anzupassen.

Erfindungsgemäß wird diese Aufgabe durch ein Verfahren nach Anspruch 1 bzw. eine Vorrichtung nach Anspruch 13 gelöst. Vorteilhafte Weiterbildungen der Erfindung sind in den jeweiligen Unteransprüchen definiert.

Das erfindungsgemäße Verfahren benötigt nicht das aufwendige Mess- bzw. Test-Equipment bestehend aus künstlichem Torso, Audioanlage mit angeschlossenem System, Mobiltelefon und Netzwerksimulator, sondern stellt eine Datenverarbeitungseinrichtung bereit, mit deren Hilfe zumindest zwei Funkdatenkanäle zur Freisprecheinrichtung aufgebaut werden. Ein erster Datenkanal ist zur Übertragung von Audiodaten zwischen der Freisprecheinrichtung und der Datenverarbeitungseinrichtung eingerichtet. Ein zweiter Datenkanal ist zur Übertragung von Steuerbefehlen und Messwerten zwischen der Datenverarbeitungseinrichtung und der Freisprecheinrichtung eingerichtet. Durch einen von der Datenverarbeitungseinrichtung gesendeten Steuerbefehl an die Freisprecheinrichtung über den zweiten Datenkanal wird die Freisprecheinrichtung in einen Einmessmodus überführt, wodurch die für die gewöhnliche Freisprechfunktion bereitgestellte automatische Signalverarbeitung deaktiviert wird. Ein erstes von einem kalibrierten Testlautsprecher ausgegebenes Testaudiosignal wird durch ein Freisprechmikrofon der Freisprecheinrichtung als erstes Freisprechmikrofonsignal aufgenommen und über den ersten Datenkanal an die Datenverarbeitungseinrichtung übertragen. In der Datenverarbeitungseinrichtung erfolgt dann die Analyse des ersten Freisprechmikrofonsignals durch Bestimmen seines Frequenzgangs. Aus dem Frequenzgang lassen sich dann frequenzabhängige Verstärkungswerte zur Korrektur des ersten Freisprechmikrofonsignals bestimmen, um den Frequenzgang des ersten Freisprechmikrofonsignals an die akustischen Gegebenheiten im Kfz abzustimmen. Die frequenzabhängigen Verstärkungswerte werden dann über den zweiten Datenkanal an die Freisprecheinrichtung übertragen und dort als entsprechende Verstärkungswerte zur Korrektur des Freisprechmikrofonsignals in einem Mikrofonequalizer der Freisprecheinrichtung gespeichert. Das Verfahren und die Vorrichtung stellt damit eine Möglichkeit bereit, die Telefonfreisprecheinrichtung im Kfz mit Hilfe definierter Testaudiosignale direkt zu testen und mit Hilfe der ausgelesenen Freisprechmikrofonsignale deren Frequenzgang abzustimmen, indem entsprechende Korrekturwerte für die Verstärkung wiederum direkt in die Freisprecheinrichtung zur Korrektur der Freisprechmikrofonsignale geschrieben werden. Einweiterer Vorteil der Erfindung besteht darin, dass zur Analyse und Abstimmung der akustischen Eigenschaften des Kfz-hnenraums kein externes Equipment, wie z.B. der Netzwerksimulator, mehr benötigt wird. Vielmehr kann durch den Aufbau der Datenkanäle und der Anordnung des Messmikrofons und des Testlautsprechers sowie des weiteren Mess-Equipments innerhalb des Kfz das Verfahren auch während beispielsweise einer Testfahrt durchgeführt werden, indem z.B. das Messmikrofon und der Testlautsprecher an der Seite der Fahrerkopfstütze angebracht werden ohne das der Fahrer dadurch gestört würde. Somit ist eine unkomplizierte und besonders realitätsnahe Analyse und Abstimmung möglich.

Gemäß einer Weiterbildung der Erfindung wird ein Verfahren und eine Vorrichtung vorgeschlagen, die ein Abstimmen des Lautsprecherzweiges der Freisprecheinrichtung bereitstellt, indem der Frequenzgang des Lautsprecherzweigs durch Bestimmen von zweiten frequenzabhängigen Verstärkungswerten abgestimmt wird, und die zweiten frequenzabhängigen Verstärkungswerte zur Korrektur des Lautsprechersignals in einem Lautsprecherequalizer der Freisprecheinrichtung geschrieben werden.

Auf diese Weise lässt sich die Kfz-Freisprecheinrichtung als Komponente im Audiogesamtsystem eines Kfz auf einfache Weise und ohne Umwege über beispielsweise ein Mobiltelefon und einen Netzwerksimulator in einen Einmessmodus überführen und sowohl der Mikrofonzweig als auch der Lautsprecherzweig der Freisprecheinrichtung abstimmen.

Dem Problem des Einmessens des Mikrofonarrays bei mehreren Freisprechmikrofonen lässt sich gemäß einem Aspekt der Erfindung durch Kalibrierung abhelfen, indem man die unerwünschten Effekte in einer Einmessprozedur aufnimmt und anschließend in der Signalverarbeitung berücksichtigt. Dazu spielt man von der erwarteten Position der Signalquelle, z.B. nahe der Kopfstütze des Fahrersitzes, ein Audio-Testsignal, z.B. weißes Rauschen, ab und nimmt dieses mit dem Mikrofonarray auf und wertet die Aufnahme entsprechend aus. Die Auswertung beinhaltet dabei eine Bestimmung der frequenzabhängigen Phasendifferenz der aufgenommenen Mikrofonsignale. Diese frequenzabhängige Phasendifferenz der aufgenommenen Mikrofonsignale wird dann dazu verwendet, um eine vom Mikrofonsignal abhängige Filterfunktion zu bestimmen, wobei die spektralen Filterkoeffizienten mithilfe einer vorgegebenen Filterfunktion berechnet werden, deren Argument der Einfallswinkel einer spektralen Signalkomponente ist. Der Einfallswinkel wird mithilfe trigonometrischer Funktionen bzw. deren Umkehrfunktionen aus dem Phasenwinkel bestimmt, der zwischen den beiden Mikrofonsignalkomponenten verlegt. Diese Berechnung erfolgt ebenfalls spektral aufgelöst, also separat für jede darstellbare Frequenz. Winkel und Breite des Richtkegels sowie die maximale Dämpfung sind dabei Parameter der Filterfunktion. Man kann nämlich davon ausgehen, dass die Phaseneffekte zeitlich stabil und in einem Fahrzeugtyp immer gleich sind, denn das Mikrofon ist in der Serienausstattung an vorgegebener Stelle fest installiert und die Phaseneffekte durch Scheiben etc. sind immer mehr oder weniger gleich. Bei Bedarf kann natürlich statt einer nur modellspezifischen Kalibrierung auch jedes einzelne Gerät kalibriert werden. Auf diese Weise könnte man nicht nur die modelltypischen, sondern auch die durch Bauteiltoleranzen verursachten Phaseneffekte kompensieren.

Kurzbeschreibung der Abbildungen:

Figur 1 zeigt eine Ausführungsform der erfindungsgemäßen Vorrichtung in Interaktion mit einer Kfz-Freisprecheinrichtung.

Figur 2 zeigt in einem Blockschaltbild den detaillierteren Aufbau der Telefonfreisprecheinrichtung.

Figur 3 zeigt im Blockschaltbild den detaillierteren Aufbau der Datenverarbeitungseinrichtung gemäß einer weiteren Ausführungsform der Erfindung.

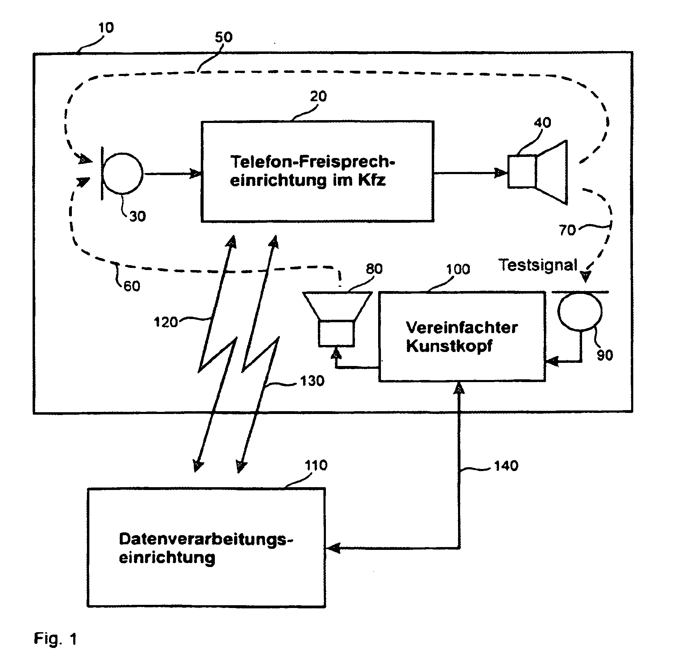

Gemäß einer Ausführungsform der Erfindung zeigt Figur 1 die in einem Kfz-Innenraum 10 angeordnete Freisprecheinrichtung 20 mit einem Freisprechmikrofon 30 und einem Kfz-Lautsprecher 40. Zwischen dem Kfz-Lautsprecher 40 und dem Freisprechmikrofon 30 bildet sich ein Echopfad 50 im Kfz-Innenraum 10 aus. Weiterhin ist im Kfz-Innenraum ein sogenannter vereinfachter Kunstkopf 100 mit einem kalibrierten Messmikrofon 80 und einem kalibrierten Testlautsprecher 90 im Bereich einer Kopfstütze eines Fahrersitzes im Kfz-Innraum angeordnet. Über eine Datenverbindung 140 ist der vereinfachte Kunstkopf 100 mit einer Datenverarbeitungseinrichtung 110 verbunden, über die die Datenverarbeitungseinrichtung Audiotestsignale zur Ausgabe über den Testlautsprecher an den Kunstkopf sendet und vom Messmikrofon aufgenommene Messmikrofonsignale empfängt. Die Freisprecheinrichtung 20 und die Datenverarbeitungseinrichtung 110 sind weiterhin so eingerichtet, dass sie über eine drahtlose Audioverbindung 120 Testaudiosignale übertragen und über eine drahtlose Datenverbindung 130 Parameter und Steuerbefehl übertragen.

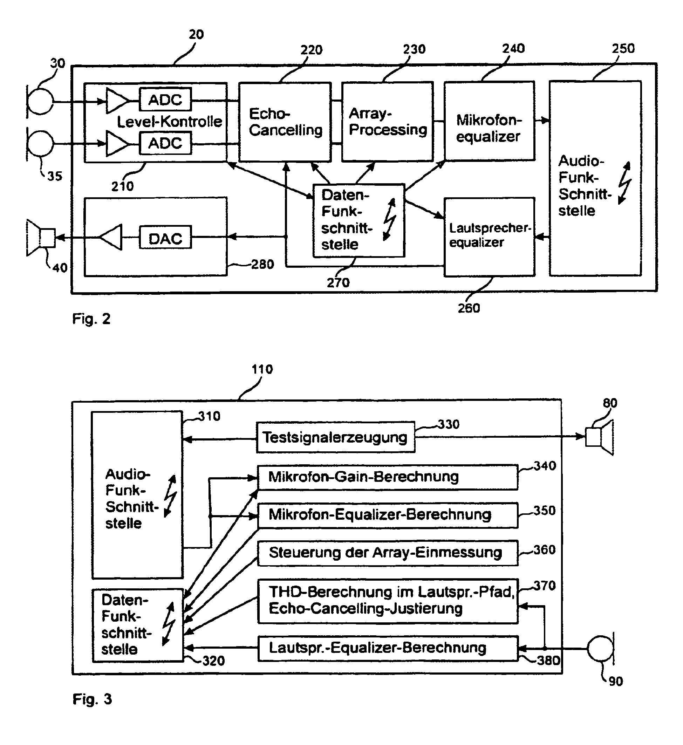

Figur 2 zeigt die Freisprecheinrichtung 20 gemäß einer weiteren Ausführungsform mit mindestens zwei Freisprechmikrofonen 30 und 35 zur Aufnahme von Audiosignalen über ein Eingangsmodul 210, das zur Levelkontrolle der aufgenommenen Audiosignale eingerichtet ist und über einen Analog-Digital-Codec (ADC) für jedes Mikrofon verfügt. Die aufgenommenen Mikrofonsignale durchlaufen dann Module 220 und 230 zum Echo-Cancelling und Array-Processing, bevor ihr Frequenzgang dann in einem Mikrofonequalizer 240 gegebenenfalls korrigiert wird. Das gegebenenfalls korrigierte Mikrofonsignal wird dann im Einmessmodus über eine Audiofunkschnittstelle 250 über die drahtlose Audioverbindung 120 an die Datenverarbeitungseinrichtung 110 gesendet. Gemäß Figur 3 verfügt die Datenverarbeitungseinrichtung zum Empfang der Freisprechmikrofonsignale über die drahtlose Audioverbindung 120 über eine Audiofunkschnittstelle 310. Die von der Audiofunkschnittstelle 310 empfangenen Freisprechmikrofonsignale werden dann in den Modulen 340 und 350 zur Mikrofonverstärkungsberechnung und Mikrofonequalizerberechnung weiterverarbeitet. Hierbei werden frequenzabhängige Verstärkungswerte zur Korrektur der Freisprechmikrofonsignale berechnet, die dann über eine Datenfunkschnittstelle 320 über die drahtlose Datenverbindung 130 an eine Datenfunkschnittstelle 270 der Freisprecheinrichtung gesendet und dort als korrigierte Verstärkungswerte im Mikrofonequalizer 240 gespeichert werden.

Gemäß der in Figur 3 dargestellten Ausführungsform verfügt die Datenverarbeitungseinrichtung 110 darüber hinaus über eine Steuerung zur Array-Einmessung 360 sowie ein Modul zur THD-Berechnung im Lautsprecherpfad sowie zur Echo-Cancelling-Justierung 370.

Beim Einmessen des Mikrofonzweigs der Freisprecheinrichtung generiert die Datenverarbeitungseinrichtung zunächst einen Steuerbefehl, der durch die Datenfunkschnittstelle 320 über die drahtlose Datenverbindung 130 an die Datenfunkschnittstelle 270 der Freisprecheinrichtung gesendet wird und die Freisprecheinrichtung in den Einmessmodus überführt. Anschließend erzeugt die Datenverarbeitungseinrichtung ein Test-Audiosignal im Testsignalerzeugungsmodul 330, das über den Testlautsprecher 80 im Kfz-Innenraum 10 ausgegeben und von dem zumindest einen Freisprechmikrofon 30 der Freisprecheinrichtung über den Akustikpfad 60 aufgenommen wird.

Für den Lautsprecherzweig wird ebenfalls im Testsignalerzeugungsmodul 330 ein Audiotestsignal erzeugt, das dann durch die Audiofunkschnittstelle 310 über die drahtlose Audioverbindung 120 an die Audiofunkschnittstelle 250 der Freisprecheinrichtung übertragen wird, um dort gegebenenfalls über den Lautsprecherequalizer 260 von der Ausgabeeinheit 280 und dem Kfz-Lautsprecher 40 ausgegeben zu werden. Die Ausgabeeinheit 280 verfügt dabei über einen entsprechenden Digital-Analog-Codec (DAC). Das vom Kfz-Lautsprecher 40 ausgegebene Audiotestsignal wird vom Messmikrofon 90 über den Akustikpfad 70 als Messmikrofonsignal aufgenommen. Im Lautsprecherequalizerberechnungsmodul 380 wird dann der Frequenzgang des Messmikrofonsignals bestimmt, und aus dem Frequenzgang werden frequenzabhängige Verstärkungswerte zur Korrektur des Messmikrofonsignals berechnet, die dann von der Datenfunkschnittstelle 320 über die drahtlose Datenverbindung 130 an die Datenfunkschnittstelle 270 übertragen werden und als korrigierte frequenzabhängige Verstärkungswerte in den Lautsprecherequalizer 260 zur Korrektur der Signale im Lautsprecherzweig gespeichert werden.

Nachfolgend wird die Analyse und Abstimmung der Signale im Mikrofonzweig der Freisprecheinrichtung anhand verschiedener Ausführungsformen beschrieben.

Ein "Tuning-Set" bestehend aus einer kalibrierten Mikrofon-Lautsprecherkombination 80, 90 als vereinfachtem Kunstkopf 100 wird an der Kopfstütze des Fahrersitzes montiert und an einen Bluetooth-fähigen PC als Datenverarbeitungseinrichtung 110 über die Datenverbindung 140 angeschlossen. Im Sinne der weiteren Beschreibung umfasst das Tuning-Set das Messmikrofon, den Testlautsprecher und die Datenverarbeitungseinrichtung, falls nichts anderes bestimmt ist.

Der PC verbindet sich per Bluetooth-Audio-Verbindung als drahtlose Audioverbindung 120 gemäß Bluetooth Hands-Free Profil mit der Freisprecheinrichtung 20. Darüber hinaus baut der PC eine zusätzliche, proprietäre Bluetooth-Verbindung als drahtlose Daten-Verbindung 130 per Bluetooth-Serial-Port Profil zur Freisprecheinrichtung auf. Die Bluetooth-Audio-Verbindung entspricht dabei dem ersten Datenkanal als synchrone Datenverbindung und die proprietäre Bluetooth-Verbindung dem zweiten Datenkanal als asynchrone Datenverbindung. Gemäß einer Ausführungsform der Erfindung sind erster und zweiter Datenkanal zu einem Datenkanal zusammengefasst, über den sowohl die Audiodaten als auch die Steuerbefehle und Messwerte zwischen dem PC als Datenverarbeitungseinrichtung und der Freisprecheinrichtung übertragen werden.

Anschließend versetzt der PC die Freisprecheinrichtung mittels eines über die Bluetooth-Datenverbindung gesendeten Steuerbefehls in den "Tuning-Modus", woraufhin die Freisprecheinrichtung die für die gewöhnliche Freisprechfunktion benötigte Signalverarbeitung (Equalizer, Automatic Gain Control, Noise-Reduktion, Echo-Cancelling, etc.) deaktiviert und die im folgenden beschrieben Analyse- und Abstimmungs-Prozeduren durchführt. Die dabei vom PC bzw. in der Freisprecheinrichtung berechneten Parameter werden in der Freisprecheinrichtung, beispielsweise im Mikrofon- oder Lautsprecherequalizer 240, 260 resident gespeichert, um sie später in der Signalverarbeitung der Mikrofon-und/oder Lautsprechersignale anzuwenden.

Der Lautsprecher ("künstlicher Mund") 80 des Tuning-Sets gibt TestAudiosignale aus (z.B. weißes Rauschen), die vom Freisprechmikrofon 30 der Freisprecheinrichtung 20 aufgenommen werden und über die Bluetooth-Audio-Verbindung 120 zum PC des Tuning-Sets gesendet werden, wo das empfangene Signal analysiert wird. Die Eigenschaften des Mikrofons 30 sowie des Kfz-Innenraums 10 beeinflussen den Frequenzgang des Signals, was mit dem Mikrofonequalizer 240 in der Freisprecheinrichtung korrigierbar ist.

Der Frequenzgang berechnet sich dabei wie folgt:

$M_{soll}(f)$ ist die Soll-Energie des Mikrofonsignals in der Freisprecheinrichtung bei der Frequenz f in einem optimal abgestimmten System bei Ausgabe des Testsignals aus dem Lautsprecher 80 des Tuning-Sets.

$M_{ist}(f)$ ist die tatsächliche Energie desselben Signals, woraus sich ein Equalizer wie folgt bestimmen lässt:

$$G_M(f)=10\log_{10}(M_{soll}(f)/M_{ist}(f)),$$

wobei $G_M(f)$ die Verstärkung in dB bei der Frequenz f ist, die auf das Mikrofonsignal in der Freisprecheinrichtung anzuwenden ist, um die Abweichung vom Soll zu kompensieren. Die Gesamtheit der Gain-Faktoren bei den realisierten Frequenzen f wird als dabei Equalizer bezeichnet.

Gemäß einer Ausführungsform wir der Equalizer weiter korrigiert. Ist das Resultat bei der Berechnung von $G_M$ (f) kleiner als eine untere Schranke $G_{min}$, wird $G_M(f)$ auf $G_{min}$ gesetzt, überschreitet das Berechnungsergebnis eine obere Schranke $G_{max}$, wird $G_M(f)$ auf $G_{max}$ begrenzt. Ist eine solche Begrenzung erforderlich, warnt das Tuning-Set gemäß einer Ausführungsform beispielsweise durch Ausgabe einer entsprechenden Warnung am PC, dass eine optimale Frequenzgang-Abstimmung des Mikrofonzweigs der Freisprecheinrichtung nicht möglich ist.

Gemäß einer weiteren Ausführungsform wird weiterhin die Aussteuerung des Mikrofonsignals in der Freisprecheinrichtung während des Vorhandenseins des Audio-Testsignals ermittelt, da sowohl eine Übersteuerung ("Clipping") als auch eine zu geringe digitale Auflösung des Freisprechmikrofonsignals, die die Performance der Signalverarbeitung verringert, unbedingt zu vermeiden ist.

Hierbei ist $P_{soll}$ der Soll-Pegel des Freisprechmikrofonsignals nach Analog-Digital-Wandlung in Modul 210, gemessen in dB unter Maximalpegel des digitalisierten Mikrofonsignals, bei Ausgabe des Testsignals aus dem Testlautsprecher 80 des Tuning-Sets. $P_{ist}$ ist der tatsächliche Pegel desselben Signals in der Freisprecheinrichtung, der von der Datenfunkschnittstelle 270 der Freisprecheinrichtung über die Bluetooth Datenverbindung 130 zum PC 110 übermittelt wird. $P_{ist-EQ}$ ist der Ist-Pegel des Mikrofonsignals, nachdem der aus dem Frequenzgang berechnete und im Mikrofonequalizer 240 gespeicherte Equalizer auf das Mikrofonsignal angewendet wurde. Die Differenz $\Delta=P_{soll}-P_{ist\_EQ}$ ist dann die Änderung des Gain-Faktors (in dB) des Analog-Verstärkers im A/D-Codec (ADC) 210 des Mikrofonzweigs, womit sich die Abweichung von der Sollaussteuerung - unter Berücksichtigung des zuvor berechneten Equalizers - kompensieren lässt. Ist die berechnete Gain-Änderung $\Delta$ nicht mit den Möglichkeiten des A/D-Codecs vereinbar, wird die nächstmögliche realisierbare Gain-Einstellung gewählt, und eine entsprechende Warnung beispielsweise am PC angezeigt.

In einer Ausführungsform, bei der die Freisprecheinrichtung über zwei Freisprechmikrofone 30, 35 in einem bekannten Abstand verfügt, umfasst das Abstimmen bzw. Einmessen weiterhin ein sogenanntes Array-Processing. Hierbei wird ein in der EP1595427B1 beschriebenes Beamforming-Verfahren durch Einmessen mit den Audio-Testsignalen wie folgt abgewandelt: Der gemäß der EP1595427B1 vorzugebende, für alle Frequenzen gleiche Scheiteiwinkel $\vartheta_0$ wird durch frequenzabhängige Werte $\vartheta_0(f)$ ersetzt, die gemäß der in EP1595427B1 angegeben Rechenvorschrift für den Raumwinkel $\vartheta(f)$ bestimmt werden, während vom Tuning-Set das Audio-Testsignal für den Mikrofonzweig abgespielt wird. Dabei ist $\vartheta_0 =0$ zu setzten und die Werte $\vartheta(f)$ sind während der Dauer des Testsignals zeitlich zu mitteln. Diese Berechnung erfolgt entweder in der Freisprecheinrichtung, gesteuert durch einen entsprechenden Befehl der Datenverarbeitungseinrichtung über die Bluetooth-Datenverbindung 130 oder in der Datenverarbeitungseinrichtung 110 selbst, indem die Daten über die Bluetooth-Datenverbindung 130 an diese übertragen werden. Die so berechneten Werte $\vartheta_0$ (f) werden dann in der Freisprecheinrichtung resident gespeichert.

Die Berechnung der Werte $\vartheta_0(f)$ erfolgt dabei wie folgt. Entsprechend der Rechenvorschriften in der EP1595427B1 für die Bestimmung des Raumwinkels $\vartheta(f,T)$ wird dieser für alle Frequenzen f bestimmt. Die Winkelmessungen werden über die Dauer des Testsignals zeitlich gemittelt; auf diese Weise bestimmt man den Vektor $\vartheta_0(f)$, der das Ergebnis der Einmessung beinhaltet. Die Filterfunktion F(f,T), die die Dämpfungswerte für jede Frequenz zum Zeitpunkt T enthält, lautet in EP1595427B1

$$F_{\vartheta 0}(f,T) = Z(\vartheta(f,T)-\vartheta_0) + D\Delta^2_f \, Z(\vartheta(f,T)-\vartheta_0),$$

sie beinhaltet den einzustellenden Winkel $\vartheta_0$, der den Winkel des Richtkegels vorgibt.

Auf diesen einstellbaren Parameter wird in den erfindungsgemäßen Verfahrensmodifikationen verzichtet (der Diffusionsterm in der obiger Gleichung soll für die folgenden Betrachtungen ebenfalls entfallen), stattdessen wird der während der Einmessung ermittelte Vektor $\vartheta_0(f)$ verwendet:

$$F(f,T) = Z(\vartheta(f,T)-\vartheta_0(f)),$$

d.h. die Winkelvorgabe wird durch die Bestimmung eines (frequenzabhängigen) Ist-Winkels ersetzt, der die realen Phasenstörungen enthält.

Die Zuordnungsfunktion Z bleibt wie aus EP1595427B1 bekannt eine gerade Funktion auf dem Winkel 9, z.B. $Z(\vartheta)=((1+\cos\vartheta)/2)^n$ wobei n>0 die einstellbare Breite des Richtkegels festlegt: Ein Halbwertswinkel $\gamma_{3db}$ wird mit $n=1/(1-\log_2(\cos(\gamma_{3db})+1))$ eingestellt.

Gemäß einer alternativen Ausführungsform wird statt des Raumwinkels $\vartheta_0(f)$ ein frequenzabhängiger Phasenwinkel-Offset $\varphi_0(f)$ der Mikrofonsignale in der Einmessprozedur bestimmt und in die Berechnungen einbezogen. Dazu wird in allen Rechenanweisungen von EP1595427B1 der Ausdruck $\varphi(f)$ durch $\varphi(f)-\varphi_0(f)$ ersetzt, wobei $\varphi_0(f)$ durch die Einmessprozedur wie folgt bestimmt wird: $\varphi_0(f)$ entspricht dem (zeitlich gemittelten) Phasenwinkel $\varphi(f)$ beim Abspielen des Audio-Testsignals für den Mikrofonzweig. In dieser Ausführungsform wird dauerhaft $\vartheta_0=0$ gesetzt.

In dieser alternativen Ausführungsvariante wird daher auf die Bestimmung des Raumwinkels verzichtet, stattdessen wird während der Einmessprozedur ein Phasenwinkelvektor

$$\varphi_0(f) = \arctan((Re1(f)^*Im2(f)-Im1(f)^*Re2(f))/(Re1(f)^*Re2(f)+Im1(f)^*Im2(f)))$$

bestimmt, wobei Re1(f) und Im1(f) bzw. Re2(f) und Im2(f) die Real- und Imaginärteile der spektralen Komponenten der Mikrofone 1 und 2 (Freisprechmikrofone 30, 35) bezeichnen. In dieser Variante enthält der Phasenwinkelvektor $\varphi_0(f)$ die Kalibrierungsinformation, und hier ergibt sich ein weiter Vorteil: Da für die weitere Berechnung ebenfalls kein Winkel $\vartheta_0$ mehr vorzugeben ist, also $\vartheta_0 = 0$, kann die Anwendung der Filterfunktion durch entsprechende Umformungen statt auf den Raumwinkel 9 direkt auf den korrigierten Phasenwinkeln $\varphi(f)-\varphi_0(f)$ erfolgen, so dass die rechentechnisch aufwendige Raumwinkelbestimmung gemäß EP1595427B1 unter Verwendung der Arcus Cosinus Funktion unterbleiben kann.

Nachfolgend wird die Analyse und Abstimmung der Signale im Lautsprecherzweig der Freisprecheinrichtung anhand verschiedener Ausführungsformen beschrieben.

Zunächst wird ein Test-Audiosignal für den Lautsprecherzweig generiert. Dafür sendet die Datenverarbeitungseinrichtung 110 über die Audiofunkschnittstelle 310 und die Bluetooth-Audio-Verbindung 120 als ersten Datenkanal ein Audio-Testsignal (z.B. weißes Rauschen) an die Freisprecheinrichtung, genauer gesagt an deren Audiofunkschnittstelle 250. Das Audio-Testsignal wird dann von dem zumindest einem Kfz-Lautsprecher 40 ausgegeben und vom Messmikrofon 90 (dem "künstlichen Ohr") des Tuning-Sets aufgenommen und von diesem analysiert. Alternativ wird das Signal nicht per Bluetooth-Audio-Verbindung übertragen, sondern als Reaktion auf einen Steuerbefehl der Datenverarbeitung, der über die Bluetooth-Datenverbindung 130 als zweiten Datenkanal an die Freisprecheinrichtung 20 gesendet wird, in der Freisprecheinrichtung selbst erzeugt.

Gemäß einer Ausführungsform wird aus den aufgenommenen Testsignalen im Lautsprecher-Equalizer-Berechnungsmodul 380 die Verzerrung, auch "total harmonic distortion", kurz THD genannt, im Lautsprecherzweig ermittelt, um Aufschluss über die Qualität des zumindest einen Kfz-Lautsprechers 40 und des Endverstärkers der Freisprecheinrichtung bzw. des Audiosystems, an das der zumindest eine Kfz-Lautsprecher angeschlossen ist, zu erhalten. Überschreitet THD eine kritische Schwelle (z.B. 5%), wird das Echo-Cancelling in der Freisprecheinrichtung auf "Halb-Duplex" gestellt, da "Voll-Duplex" bei zu großer Signalverzerrung im Lautsprecherzweig nicht realisierbar ist. Diese Einstellung erfolgt über einen entsprechenden Steuerbefehl des Tuning-Sets über die Bluetooth-Datenverbindung an die Freisprecheinrichtung.

Die Eigenschaften der Lautsprecher 40 sowie des Kfz-Innenraums 10 beeinflussen den Frequenzgang im Lautsprecherzweig, was mit einem Equalizer, der dann entsprechend im Lautsprecherequalizer 260 gespeichert wird, korrigierbar ist. Dieser Equalizer ist mit den Audio-Testsignalen im Lautsprecherzweig wie folgt zu berechnen.

$L_{soll}(f)$ ist die Soll-Energie des Signals im "künstlichen Ohr" des Tuning-Sets bei der Frequenz f in einem optimal abgestimmten System bei Ausgabe des Audio-Testsignals aus dem Kfz-Lautsprecher 40 der Freisprecheinrichtung 20.

$L_{ist}(f)$ ist die tatsächliche Energie desselben Signals, woraus ein Equalizer gemäß der folgenden Formel bestimmt wird:

$$G_L(f) = 10\log_{10}(L_{soll}(f)/L_{ist}(f)),$$

wobei $G_L(f)$ die Verstärkung in dB bei der Frequenz f, anzuwenden auf das Lautsprechersignal in der Freisprecheinrichtung ist, um die Abweichung der tatsächlichen Energie von der Soll-Energie zu kompensieren.

Gemäß einer Ausführungsform erfolgt die Equalizer-Korrektur nur relativ, für den Fall, dass die Lautstärke der Lautsprecherausgabe im Kfz noch von einer weiteren nicht kontrollierbaren Benutzereinstellung abhängig ist. Von den berechneten $G_L(f)$-Werten wird dann der Mittelwert über alle $G_L(f)$ subtrahiert. Ist das so erhaltene Resultat der Berechnung von $G_L(f)$ kleiner als eine untere Schranke $G_{min}$, wird $G_L(f)$ auf $G_{min}$ gesetzt. Für den Fall, dass das Berechnungsergebnis eine obere Schranke $G_{max}$ überschreitet, wird $G_L(f)$ auf $G_{max}$ begrenzt. Ist eine Begrenzung erforderlich, warnt gemäß einer Ausführungsform das Tuning-Set, dass eine optimale Frequenzgang-Abstimmung des Lautsprecherzweigs der Freisprecheinrichtung nicht möglich ist, indem beispielsweise eine entsprechende Warnung am PC als Datenverarbeitungseinrichtung 110 angezeigt wird.

Gemäß einer Ausführungsform verfügt die Freisprecheinrichtung über eine Signalverarbeitung im Lautsprecherzweig, so dass der Equalizer zur Anwendung kommt, indem die entsprechenden Equalizer-Daten von der Datenverarbeitungseinrichtung 110 per Bluetooth-Datenverbindung 130 in den Lautsprecherequalizer 260 der Freisprecheinrichtung übertragen und dort abgespeichert und dann auf die Lautsprechersignale angewendet werden. Erfolgt gemäß einer alternativen Ausführungsform keine Signalverarbeitung im Lautsprecherzweig, dient die Messung nur der Dokumentation des Frequenzgangs des Lautsprecherzweigs der Freisprecheinrichtung.

Nach erfolgter Abstimmung des Mikrofon- und/oder des Lautsprecherzweiges sendet gemäß einer Ausführungsform die Datenverarbeitungseinrichtung über die Bluetooth-Datenverbindung einen Steuerbefehl zur Freisprecheinrichtung, woraufhin diese die zuvor deaktivierte Signalverarbeitung in der Freisprecheinrichtung wieder einschaltet und diese damit in den normalen Freisprechbetrieb zurückversetzt.

Gemäß einer Ausführungsform werden die Verfahrensschritte zur Analyse und Abstimmung der akustischen Eigenschaften im Mikrofon- und/oder Lautsprecherzweig mit aktivierter Signalverarbeitung unter Anwendung der berechneten Parameter (Equalizer bzw. frequenzabhängige Verstärkungswerte) wiederholt, um die optimierte Funktion der Freisprecheinrichtung zu verifizieren und zu dokumentieren.

Gemäß einer weiteren Ausführungsform werden die berechneten Parameter in einem geeigneten Datenformat exportiert, so dass sie dann für die Serienfertigung der Freisprecheinrichtung (end-of-line-programming) zur Verfügung stehen.

Das erfindungsgemäße Verfahren und die erfindungsgemäße Vorrichtung und insbesondere die Datenverarbeitungseinrichtung sind zweckmäßigerweise mithilfe bzw. in Form eines DSP-Systems oder als Softwarekomponente eines Computerprogramms, das beispielsweise auf einem PC oder DSP-System oder jeder anderen Hardwareplattform läuft, realisiert.

Bezugszeichenliste:

| | |
|---|---|
| 10 | Kfz-Innenraum; |
| 20 | Freisprocheinrichtung; |
| 30, 35 | Freisprechmikrofon; |
| 40 | Kfz-Lautsprecher; |
| 50 | Echopfad |
| 60, 70 | Akustikpfad; |
| 80 | kalibrierter Testlautsprecher; |

| | |
|---|---|
| 90 | kalibriertes Messmikrofon; |
| 100 | vereinfachter Kunstkopf; |
| 110 | Datenverarbeitungseinrichtung; |
| 120 | drahtlose Audioverbindung |
| 130 | drahtlose Datenverbindung; |
| 140 | Datenverbindung; |
| 210 | Eingangsmodul mit ADC; |
| 220 | Echo-Cancellingmodul; |
| 230 | Array-Processingmodul; |
| 240 | Mikrofonequalltzer; |
| 250 | Audiofunkschnittstelle der Freisprecheinrichtung: |
| 260 | Lautsprecherequalizer; |
| 270 | Datenfunkschnittstelle der Freisprecheinrichtung; |
| 280 | Ausgabeeinheit mit DAC; |
| 310 | Audiofunkschnlttstelle der Datenverarbeitungseinrichtung: |
| 320 | Datenfunkschnittstelle der Datenverarbeitungseinrichtung; |
| 330 | Testsignalerzeugungsmodul; |
| 340 | Mikrofonverstärkungsberechnungsmodul; |
| 350 | Mikrofonequalizerberechnungsmodul; |
| 360 | Arrayeinmessungsteuereungsmodul; |
| 370 | THD-Berechnungs-/Echo-Cancelling-Justierungs-Modul; |
| 380 | Lautsprecherequalizerberechnungsmodul; |
| f | Frequenz; |
| T | Zeitpunkt der Bestimmung eines Spektrums bzw. eines Ausgangssignals |
| $M_{ist}(f)$ | frequenzabhängige Ist-Signalenergie des ersten Freisprechmikrofonsignals; |
| $M_{soll}(f)$ | frequenzabhängige Soll-Signalenergie des ersten Freisprechmikrofonsignals; |
| $G_M(f)$ | frequenzabhängige Verstärkung für das erste Freisprechmikrofonsignal; |
| $G_{Mmin}$ | minimale Verstärkung des Freisprechmikrofonsignals; |
| $G_{Mmax}$ | maximale Verstärkung des Freisprechmikrofonsignals; |
| $P_{ist}$ | Ist-Pegel des verstärkten ersten Freisprechmikrofonsignals in dB unter Maximalpegel; |
| $P_{soll}$ | Soll-Pegel des ersten Freisprechmikrofonsignals nach Analog-Digital- Wandlung in dB unter Maximalpegel bei Ausgabe des ersten Test Audiosignals; |
| $\varphi_0(f)$ | zeitlich gemittelter frequenzabhängiger Phasenwinkel im Einmessmodus; |
| $\varphi(f,T)$ | frequenzabhängiger Phasenwinkel der Mikrofonsignale während des Betriebs; |
| Re1(f), | Im1(f) Real- und Imaginärteile der spektralen Komponenten des ersten Freisprechmikrofonsignals (Mikrofon 1); |
| Re2(f), | Im2(f) Real- und Imaginärteile der spektralen Komponenten des zweiten Freisprechmikrofonsignals (Mikrofon 2); |
| $\vartheta_0(f)$ | zeitlich gemittelter frequenzabhängiger Einfallswinkel des ersten Test-Audiosignals im Einmessmodus; |
| $\vartheta(f,T)$ | frequenzabhängiger Einfallswinkel der Mikrofonsignale während des Betriebs; |
| F(f,T) | Filterfunktion; |
| Z | gerade Zuordnungsfunktion; |
| $L_{ist}(f)$ | frequenzabhängige Ist-Signalenergie des Messmikrofonsignals; $L_{soll}(f)$ frequenzabhängige Soll-Signalenergie des Messmikrofonsignals; |
| $G_L(f)$ | frequenzabhängige Verstärkung für das Messmikrofonsignal; |
| $G_{Lnorm}(f)$ | normierte frequenzabhängige Verstärkung; |
| $G_{Lmin}$ | minimale Verstärkung des Messmikrofonsignals; |
| $G_{Lmax}$ | maximale Verstärkung des Messmikrofonsignals. |

**Patentansprüche**

1. Verfahren zur Analyse und Abstimmung akustischer Eigenschaften einer Freisprecheinrichtung (20) eines Kfz enthaltend zumindest ein Freisprechmikrofon (30), zumindest einen Kfz-Lautsprecher (40) und eine erste Funkschnittstelle, unter Verwendung eines kalibrierten Messmikrofons (90) und eines kalibrierten Testlautsprechers (80) und einer an das Messmikrofon und den Testlautsprecher angeschlossenen Datenverarbeitungseinrichtung (110) enthaltend eine zweite Funkschnittstelle, umfassend die Schritte:

- Anordnen des Messmikrofons und des Testlautsprechers im Bereich einer Kopfstütze eines Fahrersitzes des Kfz;
- Aufbau eines ersten Datenkanals zwischen der ersten und der zweiten Funkschnittstelle durch die Datenverarbeitungseinrichtung, wobei der erste Datenkanal zur Übertragung von Audiodaten zwischen der Freisprecheinrichtung und der Datenverarbeitungseinrichtung eingerichtet ist;
- Aufbau eines zweiten Datenkanals zwischen der ersten und der zweiten Funkschnittstelle durch die Datenverarbeitungseinrichtung, wobei der zweite Datenkanal zur Übertragung von Steuerbefehlen und Messwerten zwischen der Datenverarbeitungseinrichtung und der Freisprecheinrichtung eingerichtet ist;
- Überführen der Freisprecheinrichtung in einen Einmessmodus durch einen von der Datenverarbeitungseinrichtung gesendeten Steuerbefehl, wobei die Freisprecheinrichtung im Einmessmodus die für die gewöhnliche Freisprechfunktion bereitgestellte automatische Signalverarbeitung deaktiviert;
- Erzeugen eines ersten Test-Audiosignals durch die Datenverarbeitungseinrichtung;
- Ausgeben des ersten Test-Audiosignals durch den Testlautsprecher;
- Aufnahme des ersten Test-Audiosignals durch das zumindest eine Freisprechmikrofon als erstes Freisprechmikrofonsignal;
- Übertragen des ersten Freisprechmikrofonsignals über den ersten Datenkanal an die Datenverarbeitungseinrichtung;
- Analyse des ersten Freisprechmikrofonsignals durch Bestimmung seines Frequenzgangs;
- Abstimmen des Frequenzgangs des ersten Freisprechmikrofonsignals durch Bestimmen von ersten frequenzabhängigen Verstärkungswerten zur Korrektur des ersten Freisprechmikrofonsignals;
- Übertragen der ersten frequenzabhängigen Verstärkungswerte über den zweiten Datenkanal an die Freisprecheinrichtung;
- Speichern der ersten frequenzabhängigen Verstärkungswerte in einem Mikrofonequalizer der Freisprecheinrichtung.

2. Verfahren nach Anspruch 1, weiterhin umfassend:

- Bestimmen der frequenzabhängigen Signalenergie des ersten Freisprechmikrofonsignals $M_{ist}(f)$;
- Bereitstellen einer frequenzabhängigen Soll-Signalenergie $M_{soll}(f)$ für das erste Freisprechmikrofonsignal;
- Berechnen einer frequenzabhängigen Verstärkung $G_M(f)$ für das erste Freisprechmikrofonsignal gemäß der Formel:

$$G_M(f) = 10\log_{10}(M_{soll}(f)/ M_{ist}(f));$$

und
- Verwenden der frequenzabhängigen Verstärkung $G_M(f)$ als erste frequenzabhängige Verstärkungswerte.

3. Verfahren nach Anspruch 2, weiterhin umfassend:

- Setzen der frequenzabhängigen Verstärkung $G_M(f)$ auf $G_{Mmin}$, wenn die frequenzabhängige Verstärkung $G_M(f)$ kleiner als $G_{Mmin}$ ist; und/oder
- Setzen der frequenzabhängigen Verstärkung $G_M(f)$ auf $G_{Mmax}$, wenn die frequenzabhängige Verstärkung $G_M(f)$ größer als $G_{Mmax}$ ist.

4. Verfahren nach einem der vorgehenden Ansprüche, weiterhin umfassend:

- Korrigieren des Frequenzgangs des ersten Freisprechmikrofonsignals mit den ersten frequenzabhängigen Verstärkungswerten;
- Berechnen eines Ist-Pegels $P_{ist}$ des verstärkten ersten Freisprechmikrofonsignals;
- Bereitstellen eines Soll-Pegels $P_{soll}$ des ersten Freisprechmikrofonsignals;
- Berechnen der Differenz zwischen Ist-Pegel und Soll-Pegel;
- Berechnen zumindest eines zweiten frequenzunabhängigen Verstärkungswertes zur Kompensation der Differenz zwischen Ist-Pegel und Soll-Pegel.

5. Verfahren nach einem der vorgehenden Ansprüche, wobei die Freisprecheinrichtung zumindest zwei Freisprechmikrofone (30, 35) in einem vorbestimmten Abstand zueinander enthält und das Verfahren weiterhin umfasst:

- Aufnahme des ersten Test-Audiosignals mit den zumindest zwei Freisprechmikrofonen als zugeordnete Freisprechmikrofonsignale;
- Übertragen der zugeordneten Freisprechmikrofonsignale über den ersten Datenkanal an die Datenverarbeitungseinrichtung;
- Bestimmen einer frequenzabhängigen Phasendifferenz zwischen den zugeordneten Freisprechmikrofonsignalen;
- Bestimmen eines zeitlich gemittelten frequenzabhängigen Einfallswinkels $\vartheta_0(f)$ des ersten Test-Audiosignals basierend auf der frequenzabhängigen Phasendifferenz;
- Bestimmen eines Ausgangssignals durch Verknüpfen eines der beiden zugeordneten Freisprechmikrofonsignale mit einer Filterfunktion F(f,T) basierend auf dem Einfallswinkel $\vartheta_0(f)$, wobei die Filterfunktion lautet:

$$F(f,T) = Z(\vartheta(f,T) - \vartheta_0(f))$$

wobei:

f die jeweilige Frequenz
T der Zeitpunkt der Bestimmung des Ausgangssignals
Z eine gerade Zuordnungsfunktion

$\vartheta_0(f)$ der zeitlich gemittelte frequenzabhängige Einfallswinkel im Einmessmodus, und
$\vartheta(f,T)$ der frequenzabhängige Einfallswinkel der Mikrofonsignale während des Betriebs ist.

6. Verfahren nach einem der Ansprüche 1 bis 4, wobei die Freisprecheinrichtung zumindest zwei Freisprechmikrofone in einem vorbestimmten Abstand zueinander enthält, und das Verfahren weiterhin umfasst:

- Aufnahme des ersten Test-Audiosignals mit den zumindest zwei Freisprechmikrofonen als zugeordnete Freisprechmikrofonsignale;
- Übertragen der zugeordneten Freisprechmikrofonsignale über den ersten Datenkanal an die Datenverarbeitungseinrichtung;
- Bestimmen einer frequenzabhängigen Phasendifferenz zwischen den zugeordneten Freisprechmikrofonsignalen, wobei ein Phasenwinkelvektor

$$\varphi_0(f) = arctan((Re1(f)*Im2(f)-Im1(f)*Re2(f))/(Re1(f)*Re2(f)+Im1(f)*Im2(f)))$$

bestimmt wird, und
wobei Re1(f) und Im1(f) bzw. Re2(f) und Im2(f) jeweils die Real- und Imaginärteile der spektralen Komponenten der beiden Freisprechmikrofone bezeichnen;
- Bestimmen eines Ausgangssignals durch Verknüpfen eines der beiden zugeordneten Freisprechmikrofonsignale mit einer Filterfunktion F(f,T) basierend auf dem Phasenwinkelvektor $\varphi_0(f)$, wobei die Filterfunktion lautet:

$$F(f,T) = Z(\varphi(f,T) - \varphi_0(f))$$

wobei:

$\varphi_0(f)$ der zeitlich gemittelte frequenzabhängige Phasenwinkel im Einmessmodus, und
$\varphi(f,T)$ der frequenzabhängige Phasenwinkel der Mikrofonsignale während des Betriebs ist.

7. Verfahren nach einem der vorgehenden Ansprüche, weiterhin umfassend:

- Erzeugen eines zweiten Test-Audiosignals;
- Ausgeben des zweiten Test-Audiosignals durch den zumindest einen Kfz-Lautsprecher;

- Aufnahme des zweiten Test-Audiosignals durch das Messmikrofon als Messmikrofonsignal;
- Bestimmung des Frequenzgangs des zumindest einen Kfz-Lautsprechers durch Analyse des Messmikrofonsignals;
- Abstimmen des Frequenzgangs Kfz-Lautsprechers durch Bestimmen von zweiten frequenzabhängigen Verstärkungswerten zur Korrektur des Messmikrofonsignals;
- Übertragung der zweiten frequenzabhängigen Verstärkungswerte über den zweiten Datenkanal an die Freisprecheinrichtung;
- Speichern der zweiten frequenzabhängigen Verstärkungswerte in einem Lautsprecherequalizer der Freisprecheinrichtung.

8. Verfahren nach Anspruch 7, weiterhin umfassend:

- Bestimmen der frequenzabhängigen Signalenergie des Messmikrofonsignals $L_{ist}(f)$;
- Bereitstellen einer frequenzabhängigen Soll-Signalenergie $L_{soll}(f)$ für das Messmikrofonsignal;
- Berechnen einer frequenzabhängigen Verstärkung $G_L(f)$ für das Messmikrofonsignal gemäß der Formel:

$$G_L(f) = 10\log_{10}(L_{soll}(f)/ L_{ist}(f));$$

und
- Verwenden der frequenzabhängigen Verstärkung $G_L(f)$ als zweite frequenzabhängige Verstärkungswerte.

9. Verfahren nach Anspruch 8, weiterhin umfassend:

- Subtrahieren des Mittelwertes über alle $G_L(f)$ von den einzelnen $G_L(f)$ Werten und Erzeugen einer normierten frequenzabhängigen Verstärkung $G_{Lnorm}(f)$;
- Setzen der frequenzabhängigen Verstärkung $G_{Lnorm}(f)$ auf $G_{Lmin}$, wenn die frequenzabhängige Verstärkung $G_{Lnorm}(f)$ kleiner als $G_{Lmin}$ ist; und/oder
- Setzen der frequenzabhängigen Verstärkung $G_{Lnorm}(f)$ auf $G_{Lmax}$, wenn die frequenzabhängige Verstärkung $G_{Lnorm}(f)$ größer als $G_{Lmax}$ ist.

10. Verfahren nach einem der vorgehenden Ansprüche, weiterhin umfassend:

- Überführen der Freisprecheinrichtung in einen Normalbetriebsmodus durch einen von der Datenverarbeitungseinrichtung gesendeten Steuerbefehl über den zweiten Datenkanal, wobei die Freisprecheinrichtung die für die gewöhnliche Freisprechfunktion bereitgestellte automatische Signalverarbeitung aktiviert; und
- wobei das Verfahren weiterhin bevorzugt umfaßt:
- Wiederholen der Abstimmung der Freisprecheinrichtung, wobei die für die gewöhnliche Freisprechfunktion bereitgestellte automatische Signalverarbeitung aktiviert bleibt.

11. Verfahren nach einem der vorgehenden Ansprüche, weiterhin umfassend:

- Exportieren von zumindest einem der berechneten Signalverarbeitungsparameter der Freisprecheinrichtung über den zweiten Datenkanal in die Datenverarbeitungseinrichtung; und
- Speichern des zumindest einen exportierten Signalverarbeitungsparameter in einem vorzugsweise nichtflüchtigen Speicher der Datenverarbeitungseinrichtung.

12. Verfahren nach einem der vorgehenden Ansprüche, weiterhin umfassend den Aufbau einer Funkverbindung nach dem Bluetooth-Standard zwischen der Datenverarbeitungseinrichtung und der Freisprecheinrichtung, wobei der erste Datenkanal durch einen synchronen Bluetooth-Kanal und der zweite Datenkanal durch einen asynchronen Bluetooth-Kanal bereitgestellt wird.

13. Vorrichtung zur Analyse und Abstimmung akustischer Eigenschaften einer Freisprecheinrichtung (20) eines Kfz mit zumindest einem Freisprechmikrofon (30), zumindest einem Kfz-Lautsprecher (40) und einer erste Funkschnittstelle, wobei die Vorrichtung ein kalibriertes Messmikrofon (90) und einen kalibrierten Testlautsprecher (80) und eine an das Messmikrofon und den Testlautsprecher angeschlossene Datenverarbeitungseinrichtung (110) mit einer zweiten Funkschnittstelle umfasst und das Messmikrofon und der Testlautsprecher im Bereich einer Kopfstütze eines Fahrersitzes des Kfz angeordnet ist und die Datenverarbeitungseinrichtung weiterhin umfasst:

- Mittel zum Aufbau eines ersten Datenkanals zwischen der ersten und der zweiten Funkschnittstelle, wobei der erste Datenkanal zur Übertragung von Audiodaten zwischen der Freisprecheinrichtung und der Datenverarbeitungseinrichtung eingerichtet ist;
- Mittel zum Aufbau eines zweiten Datenkanals zwischen der ersten und der zweiten Funkschnittstelle, wobei der zweite Datenkanal zur Übertragung von Steuerbefehlen und Messwerten zwischen der Datenverarbeitungseinrichtung und der Freisprecheinrichtung eingerichtet ist;
- Mittel zum Überführen der Freisprecheinrichtung in einen Einmessmodus, wobei die Freisprecheinrichtung im Einmessmodus die für die gewöhnliche Freisprechfunktion bereitgestellte automatische Signalverarbeitung deaktiviert;
- Mittel zum Erzeugen eines ersten Test-Audiosignals;
- Mittel zum Ausgeben des ersten Test-Audiosignals durch den Testlautsprecher;
- Mittel zur Aufnahme des ersten Test-Audiosignals durch das zumindest eine Freisprechmikrofon als erstes Freisprechmikrofonsignal;
- Mittel zum Empfangen des ersten Freisprechmikrofonsignals über den ersten Datenkanal;
- Mittel zur Analyse des ersten Freisprechmikrofonsignals durch Bestimmung seines Frequenzgangs;
- Mittel zum Abstimmen des Frequenzgangs des ersten Freisprechmikrofonsignals durch Bestimmen von ersten frequenzabhängigen Verstärkungswerten zur Korrektur des ersten Freisprechmikrofonsignals;
- Mittel zum Übertragen der ersten frequenzabhängigen Verstärkungswerte über den zweiten Datenkanal an die Freisprecheinrichtung.

14. Vorrichtung nach Anspruch 13, die weiterhin dazu eingerichtet ist, das Verfahren nach einem der Ansprüche 2 bis 12 auszuführen.

15. Computerprogramm, enthaltend Programmcode, der, wenn er auf einer Datenverarbeitungseinrichtung ausgeführt wird, das Verfahren gemäß einem der Ansprüche 1 bis 12 verwirklicht.

## Claims

1. Method for analysing and tuning acoustic properties of a hands-free device (20) of a motor vehicle, including at least one hands-free microphone (30), at least one motor-vehicle loudspeaker (40) and a first air interface, using a calibrated measuring microphone (90) and a calibrated test loudspeaker (80) and a data-processing device (110), connected to the measuring microphone and to the test loudspeaker, including a second air interface, comprising the following steps:

- arranging the measuring microphone and the test loudspeaker in the region of a headrest of a driver's seat of the motor vehicle;
- establishing a first data channel between the first and second air interfaces by means of the data-processing device, the first data channel having been set up for transmitting audio data between the hands-free device and the data-processing device;
- establishing a second data channel between the first and second air interfaces by means of the data-processing device, the second data channel having been set up for transmitting control commands and measured values between the data-processing device and the hands-free device;
- switching the hands-free device into a calibration mode by means of a control command sent by the data-processing device, the hands-free device in the calibration mode deactivating the automatic signal processing
- provided for the usual hands-free function;
- generating a first test audio signal by means of the data-processing device;
- outputting the first test audio signal by means of the test loudspeaker;
- receiving the first test audio signal by means of the at least one hands-free microphone, as first hands-free microphone signal;
- transmitting the first hands-free microphone signal to the data-processing device via the first data channel;
- analysing the first hands-free microphone signal by determining its frequency response;
- tuning the frequency response of the first hands-free microphone signal by determining first frequency-dependent gain values for correcting the first hands-free microphone signal;
- transmitting the first frequency-dependent gain values to the hands-free device via the second data channel; and
- storing the first frequency-dependent gain values in a microphone equaliser of the hands-free device.

2. Method according to Claim 1, further comprising:

- determining the frequency-dependent signal energy of the first hands-free microphone signal $M_{act}(f)$;
- providing a frequency-dependent set signal energy $M_{set}(f)$ for the first hands-free microphone signal;
- calculating a frequency-dependent gain $G_M(f)$ for the first hands-free microphone signal in accordance with the formula:

$$G_M(f) = 10\log_{10}(M_{set}(f)/M_{act}(f));$$

and
- using the frequency-dependent gain $G_M(f)$ as first frequency-dependent gain values.

3. Method according to Claim 2, further comprising:

- setting the frequency-dependent gain $G_M(f)$ to $G_{Mmin}$ if the frequency-dependent gain $G_M(f)$ is less than $G_{Mmin}$; and/or
- setting the frequency-dependent gain $G_M(f)$ to $G_{Mmax}$ if the frequency-dependent gain $G_M(f)$ is greater than $G_{Mmax}$.

4. Method according to one of the preceding claims, further comprising:

- correcting the frequency response of the first hands-free microphone signal with the first frequency-dependent gain values;
- calculating an actual level Pact of the amplified first hands-free microphone signal;
- providing a set level $P_{set}$ of the first hands-free microphone signal;
- calculating the difference between actual level and set level;
- calculating at least one second frequency-independent gain value for compensating for the difference between actual level and set level.

5. Method according to one of the preceding claims, wherein the hands-free device includes at least two hands-free microphones (30, 35) at a predetermined distance from one another, and the method further comprises:

- receiving the first test audio signal with the at least two hands-free microphones, as assigned hands-free microphone signals;
- transmitting the assigned hands-free microphone signals to the data-processing device via the first data channel;
- determining a frequency-dependent phase difference between the assigned hands-free microphone signals;
- determining a temporally averaged frequency-dependent angle of incidence $\varphi_0(f)$ of the first test audio signal on the basis of the frequency-dependent phase difference;
- determining an output signal by linking one of the two assigned hands-free microphone signals with a filter function $F(f,T)$ on the basis of the angle of incidence $\varphi_0(f)$, the filter function being:

$$F(f,T) = Z(\varphi(f,T) - \varphi_0(f))$$

where

f is the respective frequency
T is the time at which the output signal is determined
Z is an even assignment function
$\varphi_0(f)$ is the temporally averaged frequency-dependent angle of incidence in the calibration mode, and
$\varphi(f,T)$ is the frequency-dependent angle of incidence of the microphone signals during operation.

6. Method according to one of Claims 1 to 4, wherein the hands-free device includes at least two hands-free microphones at a predetermined distance from one another, and the method further comprises:

- receiving the first test audio signal with the at least two hands-free microphones, as assigned hands-free microphone signals;
- transmitting the assigned hands-free microphone signals to the data-processing device via the first data channel;
- determining a frequency-dependent phase difference between the assigned hands-free microphone signals, whereby a phase-angle vector

$$\varphi_0(f) = \arctan((Re1(f)*Im2(f)-Im1(f)*Re2(f))/Re1(f)*Re2(f)+Im1(f)*Im2(f)))$$

is determined, and
where Re1(f) and Im1(f) and Re2(f) and Im2(f) respectively denote the real and imaginary parts of the spectral components of the two hands-free microphones;
- determining an output signal by linking one of the two assigned hands-free microphone signals with a filter function F(f,T) on the basis of the phase-angle vector $\varphi_0$(f), the filter function being:

$$F(f,T)=Z(\varphi(f,T)-\varphi_0(f))$$

where:

$\varphi_0$ (f) is the temporally averaged frequency-dependent phase angle in the calibration mode, and
$\varphi$(f,T) is the frequency-dependent phase angle of the microphone signals during operation.

7. Method according to one of the preceding claims, further comprising:

- generating a second test audio signal;
- outputting the second test audio signal by means of the at least one motor-vehicle loudspeaker;
- receiving the second test audio signal by means of the measuring microphone, as measuring-microphone signal;
- determining the frequency response of the at least one motor-vehicle loudspeaker by analysing the measuring-microphone signal;
- tuning the frequency response of the motor-vehicle loudspeaker by determining second frequency-dependent gain values for correcting the measuring-microphone signal;
- transmitting the second frequency-dependent gain values to the hands-free device via the second data channel; and
- storing the second frequency-dependent gain values in a loudspeaker equaliser of the hands-free device.

8. Method according to Claim 7, further comprising:

- determining the frequency-dependent signal energy of the measuring-microphone signal $L_{act}$(f);
- providing a frequency-dependent set signal energy $L_{set}$(f) for the measuring-microphone signal;
- calculating a frequency-dependent gain $G_L$(f) for the measuring-microphone signal, in accordance with the formula:

$$G_L(f)=10\log_{10}(L_{set}(f)/L_{act}(f));$$

and
- using the frequency-dependent gain $G_L$(f) as second frequency-dependent gain values.

9. Method according to Claim 8, further comprising:

- subtracting the mean value overall $G_L(f)$ from the individual $G_L(f)$ values and generating a normalised frequency-dependent gain $G_{Lnorm}(f)$;
- setting the frequency-dependent gain $G_{Lnorm}(f)$ to $G_{Lmin}$ if the frequency-dependent gain $G_{Lnorm}(f)$ is less than $G_{Lmin}$; and/or
- setting the frequency-dependent gain $G_{Lnorm}(f)$ to $G_{Lmax}$ if the frequency-dependent gain $G_{Lnorm}(f)$ is greater than $G_{Lmax}$.

10. Method according to one of the preceding claims, further comprising:

- switching the hands-free device into a normal operating mode by means of a control command sent by the data-processing device via the second data channel, whereby the hands-free device activates the automatic signal processing provided for the usual hands-free function; and
- wherein the method preferably further comprises:

    - repeating the tuning of the hands-free device, whereby the automatic signal processing provided for the usual hands-free function remains activated.

11. Method according to one of the preceding claims, further comprising:

- exporting at least one of the calculated signal-processing parameters of the hands-free device into the data-processing device via the second data channel; and
- storing the at least one exported signal-processing parameter in a preferably nonvolatile memory of the data-processing device.

12. Method according to one of the preceding claims, further comprising establishing a radio connection according to the Bluetooth standard between the data-processing device and the hands-free device, whereby the first data channel is provided by a synchronous Bluetooth channel and the second data channel is provided by an asynchronous Bluetooth channel.

13. Device for analysing and tuning acoustic properties of a hands-free device (20) of a motor vehicle with at least one hands-free microphone (30), with at least one motor-vehicle loudspeaker (40) and with a first air interface, the device including a calibrated measuring microphone (90) and a calibrated test loudspeaker (80) and a data-processing device (110), connected to the measuring microphone and to the test loudspeaker, with a second air interface, and the measuring microphone and the test loudspeaker being arranged in the region of a headrest of a driver's seat of the motor vehicle, and the data-processing device further comprising

- means for establishing a first data channel between the first and the second air interface, the first data channel having been set up to transmit audio data between the hands-free device and the data-processing device;
- means for establishing a second data channel between the first and the second air interface, the second data channel having been set up to transmit control commands and measured values between the data-processing device and the hands-free device;
- means for switching the hands-free device into a calibration mode, the hands-free device in the calibration mode deactivating the automatic signal processing provided for the usual hands-free function;
- means for generating a first test audio signal;
- means for outputting the first test audio signal by means of the test loudspeaker;
- means for receiving the first test audio signal by means of the at least one hands-free microphone, as first hands-free microphone signal;
- means for receiving the first hands-free microphone signal via the first data channel;
- means for analysing the first hands-free microphone signal by determining its frequency response;
- means for tuning the frequency response of the first hands-free microphone signal by determining first frequency-dependent gain values for correcting the first hands-free microphone signal;
- means for transmitting the first frequency-dependent gain values to the hands-free device via the second data channel.

14. Device according to Claim 13, which has further been set up to execute the method according to one of Claims 2 to 12.

**15.** Computer program, including program code which, when it is executed on a data-processing device, realises the method according to one of Claims 1 to 12.

**Revendications**

**1.** Procédé d'analyse et d'accord de caractéristiques acoustiques d'une installation téléphonique mains libres (20) d'un véhicule automobile, contenant au moins un microphone mains libres (30), au moins un haut-parleur de véhicule automobile (40) et une première interface radio, avec utilisation d'un microphone de mesure (90) étalonné et d'un haut-parleur d'essai (80) étalonné et d'fun dispositif de traitement de données (110) qui est raccordé au microphone de mesure et au haut-parleur d'essai, contenant une deuxième interface radio, comprenant les étapes suivantes :

- placement du microphone de mesure et du haut-parleur d'essai dans la zone d'un appui-tête d'un siège de conducteur de véhicule automobile ;
- rétablissement d'une première voie de données entre la première et la deuxième interface radio par le dispositif de traitement de données, la première voie de données étant aménagée pour la transmission de données audio entre l'installation téléphonique mains libres et le dispositif de traitement de données ;
- établissement d'une deuxième voie de données entre la première et la deuxième interface radio par le dispositif de traitement de données, la deuxième voie de données étant aménagée pour la transmission d'instructions de commande et de valeurs de mesure entre le dispositif de traitement de données et l'installation téléphonique mains libres ;
- transfert de l'installation téléphonique mains libres dans un mode d'étalonnage par une instruction de commande envoyée par le dispositif de traitement de données, l'installation téléphonique mains libres dans le mode d'étalonnage désactivant le traitement automatique du signal fourni pour la fonction mains libres habituelle ;
- production d'un premier signal audio d'essai par le dispositif de traitement de données ;
- sortie du premier signal audio d'essai par le haut-parleur d'essai ;
- réception du premier signal audio d'essai par le au moins un microphone mains libres en tant que premier signal de microphone mains libres ;
- transmission au dispositif de traitement de données du premier signal de microphone mains libres via la première voie de données ;
- analyse du premier signal de microphone mains libres par la définition de sa caractéristique de fréquence ;
- accord de la caractéristique de fréquence du premier signal de microphone mains libres par la définition de premières valeurs d'amplification dépendantes de la fréquence pour la correction du premier signal de microphone mains libres ;
- transmission à l'installation téléphonique mains libres des premières valeurs d'amplification dépendantes de la fréquence via la deuxième voie de données ;
- enregistrement des premières valeurs d'amplification dépendantes de la fréquence dans un égaliseur de microphone de l'installation téléphonique mains libres.

**2.** Procédé selon la revendication 1, comprenant également les étapes suivantes :

- définition de l'énergie de signal dépendante de la fréquence du premier signal de microphone mains libres $M_{ist}(f)$ ;
- fourniture d'une énergie de signal de consigne $M_{soll}(f)$ dépendante de la fréquence pour le premier signal de microphone mains libres ;
- calcul d'une amplification $G_M(f)$ dépendante de la fréquence pour le premier signal de microphone mains libres selon la formule :

$$G_M(f) = 10\log_{10}(M_{soll}(f)/M_{ist}(f)) \; ;$$

et
- utilisation de l'amplification $G_M(f)$ dépendante de la fréquence en tant que premières valeurs d'amplification dépendantes de la fréquence.

**3.** Procédé selon la revendication 2, comprenant également les étapes suivantes :

- réglage sur $G_{Mmin}$ de l'amplification $G_M(f)$ dépendante de la fréquence si l'amplification $G_M(f)$ dépendante de la fréquence est inférieure à $G_{Mmin}$;
et/ou
- réglage sur $G_{Mmax}$ de l'amplification $G_M(f)$ dépendante de la fréquence si l'amplification $G_M(f)$ dépendante de la fréquence est supérieure à $G_{Mmax}$.

**4.** Procédé selon une des revendications précédentes, comprenant également les étapes suivantes :

- correction de la caractéristique de fréquence du premier signal de microphone mains libres avec les premières valeurs d'amplification dépendantes de la fréquence ;
- calcul d'un niveau effectif $P_{ist}$ du premier signal de microphone mains libres amplifié ;
- fourniture d'un niveau de consigne $P_{soll}$ du premier signal de microphone mains libres ;
- calcul de la différence entre le niveau effectif et le niveau de consigne ;
- calcul d'au moins une deuxième valeur d'amplification dépendante de la fréquence pour la compensation de la différence entre le niveau effectif et le niveau de consigne.

**5.** Procédé selon une des revendications précédentes, l'installation téléphonique mains libres contenant au moins deux microphones mains libres (30, 35) séparés par un intervalle prédéfini, et le procédé comprenant également les étapes suivantes :

- réception du premier signal audio d'essai avec les au moins deux microphones mains libres en tant que signaux de microphones mains libres affectés ;
- transmission au dispositif de traitement de données des signaux de microphone mains libres affectés, via la première voie de données ;
- définition d'une différence de phase dépendante de la fréquence entre les signaux de microphone mains libres affectés ;
- définition d'un angle d'incidence $\vartheta_0(f)$ dépendant de la fréquence, pondéré chronologiquement, du premier signal audio d'essai sur la base de la différence de phase dépendante de la fréquence ;
- définition d'un signal de sortie par la liaison d'un des deux signaux de microphone mains libres affectés avec une fonction de filtrage F(f,T) sur la base de l'angle d'incidence $\vartheta_0(f)$, la fonction de filtrage s'énonçant comme suit

$$F(f,T) = Z(\vartheta(f,T) - \vartheta_0(f))$$

f étant la fréquence correspondante
T étant l'instant de la définition du signal de sortie
Z étant une fonction d'affectation paire
$\vartheta_0(f)$ étant l'angle d'incidence dépendant de la fréquence pondéré chronologiquement dans le mode d'étalonnage, et
$\vartheta(f,T)$ étant l'angle d'incidence dépendant de la fréquence des signaux de microphone pendant le fonctionnement.

**6.** Procédé selon une des revendications précédentes 1 à 4, l'installation téléphonique mains libres contenant au moins deux microphones mains libres séparés par un intervalle défini, et le procédé comprenant également les étapes suivantes :

- réception du premier signal audio d'essai avec les au moins deux microphones mains libres en tant que signaux de microphone mains libres affectés ;
- transmission au dispositif de traitement de données des signaux de microphone mains libres affectés via la première voie de données ;
- définition d'une différence de phase dépendantes de la fréquence entre les signaux de microphone mains libres affectés, un vecteur d'angle de phase

$$\varphi_0(f) = arctan((Re1(f)*Im2(f)-$$
$$Im1(f)*Re2(f))/(Re1(f)*Re2(f)+Im1(f)*Im2(f)))$$

étant défini, et

Re1(f) et Iml (f) ou respectivement Re2(f) et Im2(f) désignant respectivement les parties réelles et imaginaires des composantes spectrales des deux microphones mains libres ;

- définition d'un signal de sortie par la liaison d'un des deux signaux de microphone mains libres affectés avec une fonction de filtrage F(f,T) sur la base du vecteur d'angle de phase $\varphi_0(f)$, la fonction de filtrage s'énonçant comme suit :

$$F(f,T) = Z(\varphi(f,T) - \varphi_0(f))$$

$\varphi_0(f)$ étant l'angle de phase dépendant de la fréquence pondéré chronologiquement dans le mode d'étalonnage, et

$\varphi(f,T)$ étant l'angle de phase dépendant de la fréquence des signaux de microphone pendant le fonctionnement.

**7.** Procédé selon une des revendications précédentes, comprenant également les étapes suivantes :

- production d'un deuxième signal audio d'essai ;
- sortie du deuxième signal audio d'essai par le au moins un haut-parleur du véhicule automobile ;
- réception du deuxième signal audio d'essai par le microphone de mesure en tant que signal de microphone de mesure ;
- définition de la caractéristique de fréquence du au moins un haut-parleur du véhicule automobile par l'analyse du signal de microphone de mesure ;
- accord de la caractéristique de fréquence du haut-parleur du véhicule automobile par la définition de deuxièmes valeurs d'amplification dépendantes de la fréquence pour la correction du signal de microphone de mesure ;
- transmission à l'installation téléphonique mains libres des deuxièmes valeurs d'amplification dépendantes de la fréquence via la deuxième voie de données ;
- enregistrement des deuxièmes valeurs d'amplification dépendantes de la fréquence dans un égaliseur de haut-parleur de l'installation téléphonique mains libres.

**8.** Procédé selon la revendication 7, comprenant également les étapes suivantes :

- définition de l'énergie de signal dépendante de la fréquence du signal de microphone de mesure $L_{ist}(f)$ ;
- fourniture d'une énergie de signal de consigne $L_{soll}(f)$ dépendante de la fréquence pour le signal de microphone de mesure ;
- calcul d'une amplification $G_L(f)$ dépendante de la fréquence pour le signal de microphone de mesure selon la formule :

$$G_L(f) = 10\log_{10}(L_{soll}(f)/L_{ist}(f)) ;$$

et
- utilisation de l'amplification $G_L(f)$ dépendante de la fréquence en tant que deuxièmes valeurs d'amplification dépendantes de la fréquence.

**9.** Procédé selon la revendication 8, comprenant également les étapes suivantes :

- soustraction de la valeur moyenne de toutes les $G_L(f)$ des différentes valeurs $G_L(f)$ et production d'une amplification $G_{Lnorm}(f)$ normalisée dépendante de la fréquence ;
- réglage sur $G_{Lmin}$ de l'amplification $G_{Lnorm}(f)$ dépendante de la fréquence si l'amplification $G_{Lnorm}(f)$ dépendante de la fréquence est inférieure à $G_{Lmin}$;
et/ou
- réglage sur $G_{Lmax}$ de l'amplification $G_{Lnorm}(f)$ dépendante de la fréquence si l'amplification $G_{Lnorm}(f)$ dépendante de la fréquence est supérieure à $G_{Lmax}$.

10. Procédé selon une des revendications précédentes, comprenant également les étapes suivantes :

- transfert de l'installation téléphonique mains libres dans un mode de fonctionnement normal par une instruction de commande envoyée par le dispositif de traitement de données via la deuxième voie de données, l'installation téléphonique mains libres activant le traitement automatique de signal fourni pour la fonction mains libres habituelle ; et
- le procédé comprenant également de préférence l'étape suivante :
- répétition de l'accord de l'installation téléphonique mains libres, le traitement automatique du signal fourni pour la fonction mains libres habituelle demeurant activé.

11. Procédé selon une des revendications précédentes, comprenant également les étapes suivantes :

- exportation vers le dispositif de traitement de données d'au moins un des paramètres de traitement du signal calculés de l'installation téléphonique mains libres via la deuxième voie de données ; et
- enregistrement du au moins un paramètre de traitement du signal exporté dans une mémoire de préférence non volatile du dispositif de traitement de données.

12. Procédé selon une des revendications précédentes, comprenant également l'établissement d'une liaison radio selon le standard Bluetooth entre le dispositif de traitement de données et l'installation téléphonique mains libres, la première voie de données étant fournie par une voie Bluetooth synchrone, et la deuxième voie de données étant fournie par une voie Bluetooth asynchrone.

13. Dispositif d'analyse et d'accord de caractéristiques acoustiques d'une installation téléphonique mains libres (20) d'un véhicule automobile avec au moins un microphone mains libres (30), au moins un haut-parleur de véhicule automobile (40) et une première interface radio, le dispositif comprenant un microphone de mesure (90) étalonné et un haut-parleur d'essai (80) étalonné, et un dispositif de traitement de données (110), connecté au microphone de mesure et au haut-parleur d'essai, avec une deuxième interface radio, et le microphone de mesure et le haut-parleur d'essai étant disposés dans la zone d'un appui-tête d'un siège de conducteur du véhicule automobile, et le dispositif de traitement de données comprenant également :

- des moyens pour l'établissement d'une première voie de données entre la première et la deuxième interface radio, la première voie de données étant aménagée pour la transmission de données audio entre l'installation téléphonique mains libres et le dispositif de traitement de données ;
- des moyens pour l'établissement d'une deuxième voie de données entre la première et la deuxième interface radio, la deuxième voie de données étant aménagée pour la transmission d'instructions de commande et de valeurs de mesure entre le dispositif de traitement de données et l'installation téléphonique mains libres ;
- des moyens pour transférer l'installation téléphonique mains libres dans un mode d'étalonnage, l'installation téléphonique mains libres désactivant dans le mode d'étalonnage le traitement automatique du signal fourni pour la fonction mains libres habituelle ;
- des moyens pour produire un premier signal audio d'essai ;
- des moyens pour sortir le premier signal audio d'essai à travers le haut-parleur d'essai ;
- des moyens pour recevoir le premier signal audio d'essai par le au moins un microphone mains libres en tant que premier signal de microphone mains libres ;
- des moyens pour la réception du premier signal de microphone mains libres via la première voie de données ;
- des moyens pour l'analyse du premier signal de microphone mains libres par la définition de sa caractéristique de fréquence ;
- des moyens pour la définition de la caractéristique de fréquence du premier signal de microphone mains libres par la définition de premières valeurs d'amplification dépendantes de la fréquence pour la correction du premier signal de microphone mains libres ;
- des moyens pour la transmission à l'installation téléphonique mains libres des premières valeurs d'amplification dépendantes de la fréquence via la deuxième voie de données.

14. Dispositif selon la revendication 13, qui est également aménagé pour exécuter le procédé selon une des revendications 2 à 12.

15. Programme informatique, contenant un code programme qui, quand il est exécuté sur un dispositif de traitement de données, réalise le procédé selon une des revendications 1 à 12.

Fig. 1

Fig. 2

Fig. 3

**IN DER BESCHREIBUNG AUFGEFÜHRTE DOKUMENTE**

**In der Beschreibung aufgeführte Patentdokumente**

- FR 2736490

- EP 1595427 B1